(19) Europäisches Patentamt
European Patent Office
Office européen des brevets

(11) **EP 4 769 445 A1**

(12) **EUROPEAN PATENT APPLICATION**
published in accordance with Art. 153(4) EPC

(43) Date of publication:
01.07.2026 Bulletin 2026/27

(21) Application number: 24859610.8

(22) Date of filing: 22.08.2024

(51) International Patent Classification (IPC):
*H01B 1/22* (2006.01)    *C09J 9/02* (2006.01)
*C09J 11/04* (2006.01)    *C09J 163/00* (2006.01)
*H01R 11/01* (2006.01)

(52) Cooperative Patent Classification (CPC):
C09J 9/02; C09J 11/04; C09J 163/00; H01B 1/22;
H01R 11/01

(86) International application number:
PCT/JP2024/029864

(87) International publication number:
WO 2025/047577 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023 JP 2023137308

(71) Applicant: Sekisui Chemical Co., Ltd.
Osaka-shi, Osaka 530-8565 (JP)

(72) Inventors:
• YAMANAKA, Yuta
Kouka-shi, Shiga 528-8585 (JP)
• OOKURA, Kouki
Kouka-shi, Shiga 528-8585 (JP)
• NAGAI, Yasuharu
Mishima-gun, Osaka 618-0021 (JP)

(74) Representative: Ter Meer Steinmeister & Partner
Patentanwälte mbB
Nymphenburger Straße 4
80335 München (DE)

(54) **CONDUCTIVE PASTE, RFID INLAY, AND METHOD FOR PRODUCING RFID INLAY**

(57)     Provided is a conductive paste capable of 1) enhancing storage stability, and capable of 2) enhancing curability, 3) enhancing adhesiveness, 4) improving tackiness of a cured product, and 5) enhancing conduction reliability even when mounting is performed in a relatively short time. A conductive paste according to the present invention contains a thermosetting compound, a thermosetting agent, a conductive filler, a thixotropic agent, and an antioxidant, thermosetting agent containing a microcapsule-type thermosetting agent or a thermosetting agent that is a solid at 25°C.

[FIG. 1.]

EP 4 769 445 A1

## Description

### TECHNICAL FIELD

The present invention relates to a conductive paste containing a conductive filler. The present invention also relates to an RFID inlay using the conductive paste and a method for producing an RFID inlay.

### BACKGROUND ART

A radio frequency identification (RFID) inlay capable of transmitting and receiving data in a non-contact manner is widely used for a non-contact RFID tag, a non-contact RFID card, and the like. In particular, an RFID inlay in an ultra high frequency (UHF) band (860 MHz to 960 MHz) attracts attention because of a long communication distance, and the RFID inlay in the UHF band is used for various articles and purposes such as a commutation ticket, inventory management, distribution management, and history management.

In the RFID inlay, a conductive paste containing a conductive filler and a binder resin may be used for adhesion and connection between a chip having an electrode on a surface and a substrate having a wiring (antenna pattern) on a surface.

In recent years, along with downsizing of electronic components using an RFID inlay, a chip used for the RFID inlay has also been downsized, and a conductive paste having high adhesiveness and capable of being disposed on a wiring with higher accuracy is required.

Patent Document 1 below discloses an adhesive applicable to an electronic component. The adhesive is an acrylic adhesive composition containing a radical initiator having a 10-hour half-life temperature of 80°C or lower, a vinylene-containing oligomer, and at least one diluent. The adhesive can be snap-cured at a low temperature, and a pot life of the adhesive at room temperature is 24 hours or more.

Patent Document 2 below discloses a conductive adhesive containing a polymerizable acrylic compound, an organic peroxide, and solder particles, in which a one-minute half-life temperature of the organic peroxide is lower than a solidus temperature of the solder particles.

### Related Art Document

### Patent Documents

Patent Document 1: JP 2006-144018 A
Patent Document 2: JP 2013-124330 A

### SUMMARY OF THE INVENTION

### PROBLEMS TO BE SOLVED BY THE INVENTION

In the conventional adhesives (conductive pastes) as described in Patent Documents 1 and 2, adhesiveness can be enhanced to some extent. However, in a conventional conductive paste, when an electronic component is produced (mounted) in an air atmosphere using the conductive paste, a polymerization reaction of the conductive paste does not sufficiently proceed due to an influence of oxygen, and an uncured portion may exist in a cured product of the conductive paste. As a result, there is a problem in that the adhesiveness cannot be sufficiently enhanced, the tackiness of a cured product cannot be improved, and the conduction reliability of an electronic component to be obtained cannot be sufficiently enhanced. This problem is more remarkable particularly when mounting is performed in a relatively short time (for example, within 15 seconds).

In general, when the curability of the adhesive (conductive paste) is enhanced, the pot life (pot life) tends to be shortened. With a conventional adhesive (conductive paste), it is difficult to enhance the curability of the adhesive (conductive paste) and enhance the storage stability.

An object of the present invention is to provide a conductive paste capable of 1) enhancing storage stability, and capable of 2) enhancing curability, 3) enhancing adhesiveness, 4) improving tackiness of a cured product, and 5) enhancing conduction reliability even when mounting is performed in a relatively short time. Another object of the present invention is to provide an RFID inlay using the conductive paste and a method for producing an RFID inlay.

## MEANS FOR SOLVING THE PROBLEMS

In the present specification, the following conductive paste, RFID inlay, and method for producing an RFID inlay are disclosed.

Item 1. A conductive paste containing: a thermosetting compound; a thermosetting agent; a conductive filler; a thixotropic agent; and an antioxidant, the thermosetting agent containing a microcapsule-type thermosetting agent or a thermosetting agent that is a solid at 25°C.

Item 2. The conductive paste according to item 1, in which the thixotropic agent is a solid at 25°C, and a ratio of a particle size of the thixotropic agent to a particle size of the conductive filler is 0.5 or less.

Item 3. The conductive paste according to item 1 or 2, in which the thermosetting compound contains an epoxy compound, and the thermosetting agent contains an anionic curing agent.

Item 4. The conductive paste according to any one of items 1 to 3, in which the conductive filler is conductive particles, and a particle size of the conductive particles is 10 $\mu$m or less.

Item 5. The conductive paste according to any one of items 1 to 4, which is used for obtaining an RFID inlay.

Item 6. An RFID inlay comprising: a substrate having a wiring on a surface; a chip having an electrode on a surface; and an adhesive portion bonding the substrate and the chip, a material of the adhesive portion being the conductive paste according to any one of items 1 to 5, and the wiring and the electrode being electrically connected by the conductive filler in the adhesive portion.

Item 7. A method for producing an RFID inlay, including: a first disposing step of disposing the conductive paste according to any one of items 1 to 5 on a surface of a substrate having a wiring on a surface; a second disposing step of disposing a chip having an electrode on a surface on a surface of the conductive paste opposite to the substrate side; and a bonding step of heating and pressurizing the conductive paste to form an adhesive portion bonding the substrate and the chip with the conductive paste, and electrically connecting the wiring and the electrode by the conductive filler in the adhesive portion.

Item 8. The method for producing an RFID inlay according to item 7, in which the substrate has an elongated shape, and in the first disposing step, the second disposing step, and the bonding step, the substrate having an elongated shape is conveyed by a roll-to-roll method to produce an RFID inlay.

## EFFECT OF THE INVENTION

A conductive paste according to the present invention contains a thermosetting compound, a thermosetting agent, a conductive filler, a thixotropic agent, and an antioxidant, the thermosetting agent containing a microcapsule-type thermosetting agent or a thermosetting agent that is a solid at 25°C. In the conductive paste according to the present invention, with the above configuration, it is possible to 1) enhance storage stability, and 2) enhance curability, 3) enhance adhesiveness, 4) improve tackiness of a cured product, and 5) enhance conduction reliability even when mounting is performed in a relatively short time.

## BRIEF DESCRIPTION OF DRAWING

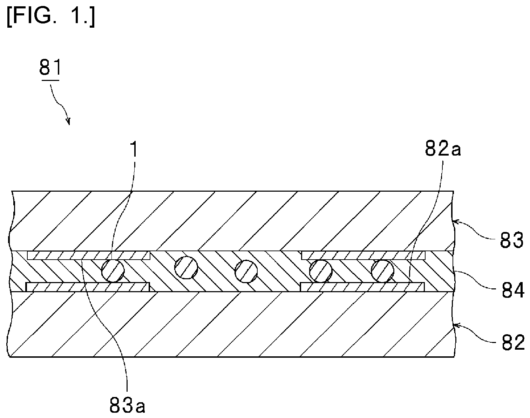

[Fig. 1] Fig. 1 is a cross-sectional view schematically illustrating an RFID inlay using a conductive paste according to a first embodiment of the present invention.

## MODES FOR CARRYING OUT THE INVENTION

Hereinafter, details of the present invention will be described.

(Conductive paste)

A conductive paste according to the present invention contains a thermosetting compound, a thermosetting agent, a conductive filler, a thixotropic agent, and an antioxidant. In the conductive paste according to the present invention, the thermosetting agent contains a microcapsule-type thermosetting agent or a thermosetting agent that is a solid at 25°C.

In a conventional conductive paste, when an electronic component is produced (mounted) in an air atmosphere using the conductive paste, a polymerization reaction of the conductive paste does not sufficiently proceed due to an influence of oxygen, and an uncured portion may exist in a cured product of the conductive paste. As a result, there is a problem in that the tackiness of the cured product cannot be improved, the adhesiveness cannot be sufficiently enhanced, and the conduction reliability of an electronic component to be obtained cannot be sufficiently enhanced. This problem is more remarkable particularly when only a (meth)acrylate compound is radically polymerized as a curable compound, or when mounting is performed in a relatively short time (for example, within 15 seconds). In the conventional conductive paste, it is difficult to enhance curability of the conductive paste and enhance storage stability.

The present inventors have found that the above problems can be solved by using specific materials in combination.

That is, since the conductive paste according to the present invention has the above-described configuration, the pot life (pot life) can be prolonged (storage stability can be enhanced). Since the conductive paste according to the present invention has the above-described configuration, curability can be enhanced and sufficient curing can be performed even when mounting (heated) is performed in a relatively short time (for example, within 15 seconds). Since the conductive paste according to the present invention has the above-described configuration, even when mounting is performed in a relatively short time, adhesiveness can be enhanced, tackiness of a cured product can be improved, and conduction reliability can be enhanced.

The conductive paste according to the present invention is in the form of a paste at 25°C. The conductive paste is used by being discharged at, for example, 20°C to 50°C. The conductive paste according to the present invention is preferably used by being discharged by a jet dispenser.

The viscosity ($\eta 25$) of the conductive paste at 25°C is preferably 15 Pa·s or more, more preferably 25 Pa·s or more, and further preferably 40 Pa·s or more, and is preferably 200 Pa·s or less, more preferably 150 Pa·s or less, and further preferably 100 Pa·s or less. When the viscosity ($\eta 25$) is the above lower limit or more, the conductive paste can be suppressed from flowing out from the wiring. When the viscosity ($\eta 25$) is the above upper limit or less, the conductive paste can be disposed on a fine wiring with high accuracy.

The viscosity ($\eta 25$) can be measured, for example, using an E-type viscometer under the conditions of 25°C and 5 rpm for the conductive paste immediately after preparation. Examples of the E-type viscometer include "TV 35 type viscometer" manufactured by Toki Sangyo Co., Ltd.

The ratio of the viscosity ($\eta \alpha$) at 25°C after the conductive paste is stored at 25°C and 50% RH for 24 hours to the viscosity ($\eta 25$) at 25°C of the conductive paste immediately after preparation is defined as a ratio (viscosity ($\eta \alpha$) after storage/viscosity ($\eta 25$) immediately after preparation). The ratio (viscosity ($\eta \alpha$) after storage/viscosity ($\eta 25$) immediately after preparation) is preferably 0.7 or more, more preferably 0.8 or more, and further preferably 0.9 or more, and is preferably 1.25 or less, more preferably less than 1.25, further preferably 1.2 or less, and particularly preferably 1.1 or less. When the ratio (viscosity ($\eta \alpha$) after storage/viscosity ($\eta 25$) immediately after preparation) is the above lower limit or more, the storage stability can be further enhanced, and the conductive paste can be suppressed from flowing out from the wiring. When the ratio (viscosity ($\eta \alpha$) after storage/viscosity ($\eta 25$) immediately after preparation) is the above upper limit or less or less than the above upper limit, the conductive paste can be disposed on a fine wiring with high accuracy.

The viscosity ($\eta \alpha$) after storage can be measured, for example, by storing the conductive paste in a thermo-hygrostat at 25°C and 50% RH for 24 hours and then using an E-type viscometer under the conditions of 25°C and 5 rpm. Examples of the E-type viscometer include "TV 35 type viscometer" manufactured by Toki Sangyo Co., Ltd.

The conductive paste has favorable adhesiveness. The conductive paste is suitably used as an adhesive. The conductive paste is particularly suitably used for adhesion between a substrate and a chip.

From the viewpoint of further enhancing the conduction reliability, the conductive paste is preferably an anisotropic conductive paste. The conductive paste is suitably used for electrical connection of electrodes. The conductive paste is suitably used for obtaining a connection structure. The conductive paste is suitably used for obtaining an electronic component. The conductive paste is particularly suitably used for obtaining an RFID inlay (use of the conductive paste for obtaining an RFID inlay). The conductive paste is suitably used for adhesion and connection between a chip having an electrode on a surface and a substrate having a wiring (antenna pattern) on a surface (use of the conductive paste for bonding and connecting a chip having an electrode on a surface and a substrate having a wiring (antenna pattern) on a surface).

Since the conductive paste contains a thermosetting compound, the conductive paste has thermal curability. The conductive paste is a thermosetting conductive paste. The conductive paste is more preferably a thermosetting anisotropic conductive paste.

In the conductive paste, when the conductive paste is heated from 30°C to 200°C at a temperature increasing rate of 10°C/min and subjected to differential scanning calorimetry (DSC), the exothermic onset temperature is preferably 50°C or higher, the exothermic peak top temperature is preferably 80°C or higher and 125°C or lower, and the exothermic end temperature is preferably 200°C or lower. Note that, in the present specification, the exothermic onset temperature refers to a temperature at a portion where the calorific value starts to increase from the baseline. In the present specification, the exothermic end temperature refers to a temperature of a portion where the calorific value has decreased to 1% of the calorific value at the exothermic peak top after reaching the exothermic peak top.

The differential scanning calorimetry (DSC) can be performed by the following method. A differential scanning calorimeter is prepared. 5 mg of the conductive paste is placed in a dedicated aluminum pan, and the aluminum pan is covered with a lid using a dedicated jig. This dedicated aluminum pan and an empty aluminum pan (reference) are placed in a heating unit, and heated from 30°C to 200°C at a temperature increasing rate of 10°C/min in the air atmosphere to observe the reverse heat flow and the non-reverse heat flow. An exothermic peak observed in the non-reverse heat flow is defined as an exothermic peak of the conductive paste. Examples of the differential scanning calorimeter include "TA7000" manufactured by Hitachi High-Tech Science Corporation.

In the differential scanning calorimetry, the exothermic onset temperature can be measured. From the viewpoint of enhancing the storage stability and discharge stability of the conductive paste and further enhancing the conduction reliability even when mounting is performed in a relatively short time, the exothermic onset temperature is preferably 50°C or higher, and more preferably 60°C or higher. The upper limit of the exothermic onset temperature is not particularly limited. The exothermic onset temperature may be 110°C or lower, 108°C or lower, 105°C or lower, 100°C or lower, or 90°C or lower. The range of the exothermic onset temperature can be set by appropriately selecting the above lower limit value and the above upper limit value.

In the differential scanning calorimetry, the exothermic peak top temperature can be measured. From the viewpoint of further enhancing the conduction reliability even when mounting is performed in a relatively short time, the exothermic peak top temperature is preferably 80°C or higher, more preferably 85°C or higher, and further preferably 90°C or higher, and is preferably 125°C or lower, and more preferably 120°C or lower.

In the differential scanning calorimetry, the exothermic end temperature can be measured. From the viewpoint of further enhancing the conduction reliability even when mounting is performed in a relatively short time, the exothermic end temperature is preferably 200°C or lower, and more preferably 180°C or lower. The lower limit of the exothermic end temperature is not particularly limited. The exothermic end temperature may be 90°C or higher, or may be 95°C or higher. The range of the exothermic end temperature can be set by appropriately selecting the above lower limit value and the above upper limit value.

In the differential scanning calorimetry, an absolute value of a difference between the exothermic onset temperature and the exothermic end temperature is preferably 5°C or higher, more preferably 10°C or higher, further preferably 15°C or higher, and particularly preferably 20°C or higher, and is preferably 100°C or lower, more preferably 95°C or lower, further preferably 90°C or lower, particularly preferably 85°C or lower, and most preferably 80°C or lower. When the absolute value of the difference between the exothermic onset temperature and the exothermic end temperature is the above lower limit or more and the above upper limit or less, the storage stability of the conductive paste can be further enhanced, and the conduction reliability can be further enhanced even when mounting is performed in a relatively short time.

In the differential scanning calorimetry, the number of exothermic peaks is preferably one. In the differential scanning calorimetry, it is preferable that only one exothermic peak is observed. In the differential scanning calorimetry, it is preferable that two or more exothermic peaks are not observed.

Hereinafter, each component contained in the conductive paste will be described.

Note that, in the present specification, "(meth)acryl" represents acryl and methacryl, and "(meth)acrylate" represents acrylate and methacrylate.

<Thermosetting compound>

The thermosetting compound is a compound curable by heating. Examples of the thermosetting compound include an epoxy compound, a (meth)acrylic compound, an oxetane compound, an episulfide compound, a phenol compound, an amino compound, an unsaturated polyester compound, a polyurethane compound, a silicone compound, and a polyimide compound. Only one kind of the thermosetting compound may be used, or two or more kinds thereof may be used in combination.

From the viewpoint of further enhancing the conduction reliability even when mounting is performed in a relatively short time, the thermosetting compound preferably contains an epoxy compound.

Examples of the epoxy compound include a glycidylamine type epoxy compound, a bisphenol A type epoxy compound, a bisphenol F type epoxy compound, a bisphenol S type epoxy compound, a phenol novolac type epoxy compound, a biphenyl type epoxy compound, a biphenyl novolac type epoxy compound, a biphenol type epoxy compound, a naphthalene type epoxy compound, a fluorene type epoxy compound, a phenol aralkyl type epoxy compound, a naphthol aralkyl type epoxy compound, a dicyclopentadiene type epoxy compound, an anthracene type epoxy compound, an epoxy compound having an adamantane skeleton, an epoxy compound having a tricyclodecane skeleton, a naphthylene ether type epoxy compound, and an epoxy compound having a triazine nucleus in the skeleton.

The epoxy compound may be a glycidyl ether compound. The glycidyl ether compound is a compound having at least one glycidyl ether group.

From the viewpoint of further enhancing the conduction reliability even when mounting is performed in a relatively short time, the thermosetting compound more preferably contains an epoxy compound having an aromatic skeleton, and further preferably contains a bisphenol A type epoxy compound or a bisphenol F type epoxy compound. Only one kind of the epoxy compound may be used, or two or more kinds thereof may be used in combination.

The molecular weight of the thermosetting compound is preferably 350 or more, more preferably 400 or more, further preferably 450 or more, and particularly preferably 500 or more, and is preferably 4500 or less, more preferably 4000 or less, further preferably 3500 or less, and particularly preferably 3000 or less. When the molecular weight of the thermosetting compound is within the above range, the viscosity of the conductive paste can be adjusted to a suitable range, and the conduction reliability can be further enhanced.

When the structural formula of the thermosetting compound can be specified, the molecular weight of the thermosetting compound means a molecular weight that can be calculated from the structural formula. When the structural formula of the thermosetting compound cannot be specified, the molecular weight means a weight average molecular weight. The weight average molecular weight refers to a weight average molecular weight in terms of polystyrene measured by gel permeation chromatography (GPC) . Since the thermosetting compound has a relatively small molecular weight, the structural formula of the thermosetting compound can be generally specified. The weight average molecular weight can be measured by the following measurement apparatus and measurement conditions.

Measuring apparatus: "Waters GPC System (Waters 2690 + Waters 2414 (RI))" manufactured by Nihon Waters K.K.

Column: Shodex GPC LF-G × 1, Shodex GPC LF-804 × 2
Mobile phase: THF 1.0 mL/min
Sample concentration: 5 mg/mL
Detector: differential refractive index detector (RID)
Standard substance: polystyrene (manufactured by Tosoh Corporation, weight average molecular weight: 620 to 590000)

The content of the thermosetting compound in 100 wt% of the conductive paste is preferably 15 wt% or more and more preferably 20 wt% or more, and is preferably 90 wt% or less, more preferably 80 wt% or less, and further preferably 70 wt% or less. When the content of the thermosetting compound is the above lower limit or more and the above upper limit or less, curability can be further enhanced, adhesiveness can be further enhanced, tackiness of a cured product can be further improved, and conduction reliability can be further enhanced even when mounting is performed in a relatively short time. Note that, when the thermosetting compound contains two or more kinds of thermosetting compounds, the content of the thermosetting compound refers to the total content of the two or more kinds of thermosetting compounds.

The content of the epoxy compound in 100 wt% of the conductive paste is preferably 15 wt% or more and more preferably 20 wt% or more, and is preferably 90 wt% or less, more preferably 80 wt% or less, and further preferably 70 wt% or less. When the content of the epoxy compound is the above lower limit or more and the above upper limit or less, curability can be further enhanced, adhesiveness can be further enhanced, tackiness of a cured product can be further improved, and conduction reliability can be further enhanced even when mounting is performed in a relatively short time.

<Thermosetting agent>

In the conductive paste, the thermosetting agent contains a microcapsule-type thermosetting agent or a thermosetting agent that is a solid at 25°C. In the conductive paste, the thermosetting agent may contain a thermosetting agent that is a solid at 25°C, or may contain a microcapsule-type thermosetting agent. From the viewpoint of further enhancing the curability and further improving the tackiness of a cured product even when mounting is performed in a relatively short time, the thermosetting agent preferably contains a thermosetting agent that is a solid at 25°C, and is preferably a thermosetting agent that is a solid at 25°C. From the viewpoints of further enhancing the storage stability, further enhancing the curability, further enhancing the adhesiveness, further improving the tackiness of a cured product, and further enhancing the conduction reliability even when mounting is performed in a relatively short time, the thermosetting agent preferably contains a microcapsule-type thermosetting agent, and is preferably a microcapsule-type thermosetting agent. Only one kind of the thermosetting agent may be used, or two or more kinds thereof may be used in combination.

In the microcapsule-type thermosetting agent, the thermosetting agent component is contained in the microcapsule. In the microcapsule-type thermosetting agent, the encapsulant of the microcapsule is a thermosetting agent component. The microcapsule-type thermosetting agent can release a thermosetting agent component. In the microcapsule-type thermosetting agent, the material of the microcapsule is not particularly limited. Examples of the material of the microcapsule include ethyl cellulose, polyvinyl alcohol, gelatin, and alginic acid.

From the viewpoint of further enhancing the curability and further improving the tackiness of a cured product even when mounting is performed in a relatively short time, the melting point of the thermosetting agent that is a solid at 25°C is preferably 50°C or higher, more preferably 60°C or higher, and further preferably 70°C or higher, and is preferably 150°C or lower, more preferably 140°C or lower, and further preferably 130°C or lower.

The melting point of the thermosetting agent that is a solid at 25°C can be calculated, for example, from an endothermic peak obtained by performing differential scanning calorimetry (DSC).

The thermosetting agent may be an anionic curing agent or a cationic curing agent. The thermosetting agent preferably contains an anionic curing agent. Examples of the anionic curing agent include an amine curing agent (amine compound), an imidazole curing agent, a phenol curing agent (phenol compound), and an acid anhydride curing agent (acid anhydride).

In the conductive paste, it is particularly preferable that the thermosetting compound contains an epoxy compound, and the thermosetting agent contains an anionic curing agent. In this case, even when mounting is performed in a relatively short time, the curability can be further enhanced, the adhesiveness can be further enhanced, the tackiness of a cured product can be further improved, and the conduction reliability can be further enhanced.

The thermosetting agent (anionic curing agent) preferably contains an amine curing agent (amine compound), an imidazole curing agent, a phenol curing agent (phenol compound), or an acid anhydride curing agent (acid anhydride), and more preferably contains an amine curing agent. In these cases, even when mounting is performed in a relatively short time, the curability can be further enhanced, the adhesiveness can be further enhanced, the tackiness of a cured product can be further improved, and the conduction reliability can be further enhanced.

Examples of the amine curing agent include dicyandiamide, an imidazole compound, diaminodiphenylmethane, and diaminodiphenylsulfone. From the viewpoint of further enhancing the conduction reliability even when mounting is performed in a relatively short time, the amine curing agent preferably contains dicyandiamide or an imidazole compound. The amine curing agent may be a thermosetting agent that is a solid at 25°C, or may be a microcapsule-type thermosetting agent. The amine curing agent may be contained in the microcapsule.

Examples of the imidazole curing agent include 2-undecylimidazole, 2-heptadecylimidazole, 2-methylimidazole, 2-ethyl-4-methylimidazole, 2-phenylimidazole, 2-phenyl-4-methylimidazole, 1-benzyl-2-methylimidazole, 1-benzyl-2-phenylimidazole, 1,2-dimethylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-undecylimidazolium trimellitate, 1-cyanoethyl-2-phenylimidazolium trimellitate, 2,4-diamino6-[2'-methylimidazolyl-(1')]-ethyl-s-triazine, 2,4-diamino6-[2'-undecylimidazolyl-(1')]-ethyl-s-triazine, 2,4-diamino6-[2'-ethyl-4'-methylimidazolyl-(1')]-ethyl-s-triazine, 2,4-diamino6-[2'-methylimidazolyl-(1')]-ethyl-s-triazine isocyanuric acid adduct, 2-phenylimidazole isocyanuric acid adduct, 2-methylimidazole isocyanuric acid adduct, 2-phenyl-4,5-dihydroxymethylimidazole, and 2-phenyl-4-methyl-5-dihydroxymethylimidazole.

Examples of the phenol curing agent include phenol novolac, o-cresol novolac, p-cresol novolac, t-butylphenol novolac, dicyclopentadiene cresol, polypara-vinylphenol, bisphenol A type novolac, xylylene modified novolac, decalin modified novolac, poly(di-o-hydroxyphenyl)methane, poly(dim-hydroxyphenyl)methane, and poly(di-p-hydroxyphenyl) methane. From the viewpoint of further enhancing the flexibility of a cured product and the flame retardancy of a cured product, a phenol resin having a melamine skeleton, a phenol resin having a triazine skeleton, or a phenol resin having an allyl group is preferable.

Examples of commercially available products of the phenol curing agent include MEH-8005, MEH-8010, MEH-8015, and MEH-8000H (all manufactured by Meiwa Plastic Industries, Ltd.), YLH903 (manufactured by Mitsubishi Chemical Corporation), LA-7052, LA-7054, LA-7751, LA-1356, and LA-3018-50P (all manufactured by DIC Corporation), and PS6313 and PS6492 (all manufactured by Gun Ei Chemical Industry Co., Ltd.) .

The content of the thermosetting agent in 100 wt% of the conductive paste is preferably 1 wt% or more, more preferably 3 wt% or more, and further preferably 5 wt% or more, and is preferably 20 wt% or less, more preferably 18 wt% or less, and further preferably 15 wt% or less. When the content of the thermosetting agent is the above lower limit or more and the above upper limit or less, the storage stability can be further enhanced, and the curability can be further enhanced even when mounting is performed in a relatively short time.

The content of the thermosetting agent is preferably 3 parts by weight or more, more preferably 5 parts by weight or more, and further preferably 10 parts by weight or more, and is preferably 40 parts by weight or less, more preferably 30 parts by weight or less, and further preferably 20 parts by weight or less, with respect to 100 parts by weight of the content of the thermosetting compound. When the content of the thermosetting agent is the above lower limit or more and the above upper limit or less, the storage stability can be further enhanced, and the curability can be further enhanced even when mounting is performed in a relatively short time.

<Conductive filler>

The conductive filler is not particularly limited. The conductive filler may be conductive particles or carbon fibers.

From the viewpoint of further enhancing the conduction reliability, in the conductive paste, the conductive filler is preferably conductive particles including resin particles and a conductive layer disposed on the surface of the resin particles, or metal particles having a melting point of higher than 450°C. From the viewpoint of further enhancing the conduction reliability, in the conductive paste, the conductive filler is preferably metal particles having a melting point of higher than 450°C. The conductive filler described here is different from solder particles. When the conductive particles described here are used, the discharge stability of the conductive paste can be enhanced. When only metal particles having a melting point of 450°C or less (for example, solder particles) are used as the conductive filler, it is difficult to sufficiently enhance the discharge stability of the conductive paste as compared with the case of using metal particles having a melting point of higher than 450°C.

The shape of the conductive filler is not particularly limited. The shape of the conductive filler may be a spherical shape, a shape other than a spherical shape, a flat shape, or the like.

The conductive filler is preferably conductive particles. The conductive particles may be solder particles or metal particles. The metal particles may be metal powder. The conductive particle may include a base particle and a conductive portion disposed on a surface of the base particle. From the viewpoint of further enhancing the conduction reliability, the conductive particle preferably includes a base particle and a conductive portion disposed on the surface of the base particle.

When the conductive filler is conductive particles, the particle size of the conductive particles is preferably 0.1 $\mu$m or more, more preferably 1 $\mu$m or more, and further preferably 2 $\mu$m or more, and is preferably 100 $\mu$m or less, more preferably 30 $\mu$m or less, and further preferably 10 $\mu$m or less. When the particle size of the conductive particles is the above lower limit or more and the above upper limit or less, the conduction reliability can be further enhanced even when mounting is performed in a relatively short time.

The particle size of the conductive particles is preferably an average particle size, and more preferably a number average particle size. The average particle size of the conductive particles is determined, for example, by observing 50 arbitrary conductive particles with an electron microscope or an optical microscope, and calculating the average value of the particle sizes of the respective conductive particles or performing laser diffraction type particle size distribution measurement.

In the conductive particles, when the particle size of the conductive particles is measured by a method of observing 50 arbitrary conductive particles with an electron microscope or an optical microscope, for example, the particle size can be measured as follows. An embedded resin body for inspection of conductive particles is prepared by adding and dispersing the conductive particles in "Technovit 4000" manufactured by Kulzer GmbH so that the content of the conductive particles is 30 wt%. Using an ion milling apparatus ("IM4000" manufactured by Hitachi High-Technologies Corporation), a cross section of the conductive particles is cut out so as to pass near the center of the conductive particles dispersed in the embedded resin body for inspection of conductive particles. Then, using a field emission scanning electron microscope (FE-SEM), the image magnification is set to 25000 times, 50 conductive particles are randomly selected, and each conductive particle is observed. The equivalent circle diameter of each conductive particle is measured, and the arithmetic average thereof is taken as the particle size of the conductive particle.

The coefficient of variation (CV value) of the particle size of the conductive particles is preferably 10% or less and more preferably 5% or less. When the coefficient of variation of the particle size of the conductive particles is the above upper limit or less, the conduction reliability can be further enhanced. The lower limit of the coefficient of variation (CV value) of the particle size of the conductive particles is not particularly limited. The coefficient of variation (CV value) of the particle size of the conductive particles may be 0% or more or 1% or more.

The coefficient of variation (CV value) can be measured as follows.

$$\text{CV value (\%)} = (\rho/\text{Dn}) \times 100$$

$\rho$: standard deviation of particle size of conductive particles
Dn: average value of particle sizes of conductive particles

The content of the conductive filler in 100 wt% of the conductive paste is preferably 0.1 wt% or more, more preferably 1 wt% or more, and further preferably 5 wt% or more, and is preferably 80 wt% or less, more preferably 60 wt% or less, and further preferably 40 wt% or less. When the content of the conductive filler is the above lower limit or more and the above upper limit or less, the conduction reliability can be further enhanced even when mounting is performed in a relatively short time.

The content of the conductive filler is preferably 2 parts by weight or more, more preferably 3 parts by weight or more, further preferably 5 parts by weight or more, and particularly preferably 7 parts by weight or more, and is preferably 35 parts by weight or less, more preferably 30 parts by weight or less, further preferably 25 parts by weight or less, and particularly preferably 20 parts by weight or less with respect to 100 parts by weight of the content of the thermosetting compound. When the content of the conductive filler is the above lower limit or more and the above upper limit or less, the conduction reliability can be further enhanced even when mounting is performed in a relatively short time.

The conductive filler preferably contains a metal. Examples of the metal include gold, silver, copper, platinum, palladium, zinc, lead, aluminum, cobalt, indium, ruthenium, nickel, chromium, titanium, antimony, bismuth, germanium, cadmium, and alloys thereof. Tin-doped indium oxide (ITO) may be used as the metal. Only one kind of the metal may be used, or two or more kinds thereof may be used in combination.

From the viewpoint of further lowering the connection resistance between the electrodes, the conductive filler preferably contains an alloy containing tin, nickel, palladium, ruthenium, silver, copper, or gold, and more preferably contains nickel or palladium. From the viewpoint of enhancing the corrosion resistance of the conductive filler and maintaining high conduction reliability, the conductive filler preferably contains nickel or gold, and more preferably contains nickel. From the viewpoint of enhancing the corrosion resistance of the conductive filler and maintaining high conduction reliability, the conductive filler particularly preferably contains nickel on the outer surface.

When the conductive particles are metal particles, examples of the metal as a material of the metal particles include silver, copper, nickel, silicon, gold, titanium, and alloys such as solder. From the viewpoint of more effectively enhancing the conduction reliability, the material of the metal particles preferably contains nickel or a nickel alloy, and the material of the metal particles is more preferably nickel or a nickel alloy. From the viewpoint of more effectively enhancing the conduction reliability, the outer surface portion of the metal particles preferably contains nickel or a nickel alloy.

Hereinafter, details of the conductive particle including the base particle and the conductive portion disposed on the surface of the base particle will be described.

(Base particle)

Examples of the base particle include a resin particle, an inorganic particle excluding a metal particle, an organic-inorganic hybrid particle, and a metal particle. The base particle is preferably a base particle excluding a metal particle, and more preferably a resin particle, an inorganic particle excluding a metal particle, or an organic-inorganic hybrid particle. The base particle may be a core-shell particle including a core and a shell disposed on a surface of the core. The core may be an organic core, and the shell may be an inorganic shell.

The base particle is more preferably a resin particle or an organic-inorganic hybrid particle, and may be a resin particle or an organic-inorganic hybrid particle. By using these preferable base particles, the effect of the present invention is more effectively exhibited.

As the material of the resin particles, various resins are suitably used. Examples of the material of the resin particles include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polyalkylene terephthalate, polycarbonate, polyamide, a phenol formaldehyde resin, a melamine formaldehyde resin, a benzoguanamine formaldehyde resin, a urea formaldehyde resin, a phenol resin, a melamine resin, a benzoguanamine resin, a urea resin, an epoxy resin, an unsaturated polyester resin, a saturated polyester resin, polysulfone, polyphenylene oxide, polyacetal, polyimide, polyamide imide, polyether ether ketone, polyether sulfone, a divinylbenzene polymer, and a polymer obtained by polymerizing one or two or more of various polymerizable monomers having an ethylenically unsaturated group. The divinylbenzene polymer may be a divinylbenzene-based copolymer. Examples of the divinylbenzene-based copolymer include a divinylbenzene-styrene copolymer and a divinylbenzene-(meth)acrylic acid ester copolymer.

Since resin particles having arbitrary compression characteristics suitable for the conductive paste can be designed and synthesized, and the hardness of the resin particles can be easily controlled within a suitable range, the material of the resin particles is preferably a polymer obtained by polymerizing one or more polymerizable monomers having a plurality of ethylenically unsaturated groups.

When the resin particles are obtained by polymerizing a polymerizable monomer having an ethylenically unsaturated group, examples of the polymerizable monomer having an ethylenically unsaturated group include a non-crosslinkable monomer and a crosslinkable monomer.

Examples of the non-crosslinkable monomer include styrene monomers such as styrene and $\alpha$-methylstyrene; carboxyl group-containing monomers such as (meth)acrylic acid, maleic acid, and maleic anhydride; alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; oxygen atom-containing (meth)acrylate compounds such as 2-hydroxyethyl (meth)acrylate, glycerol (meth)acrylate, polyoxyethylene(meth)acrylate, and glycidyl (meth)acrylate; nitrile-containing monomers such as (meth)acrylonitrile; acid vinyl ester compounds such as vinyl acetate, vinyl butyrate, vinyl laurate, and vinyl stearate; unsaturated hydrocarbons such as ethylene, propylene, isoprene, and butadiene; and halogen-containing monomers such as trifluoromethyl (meth)acrylate, pentafluoroethyl (meth)acrylate, vinyl chloride, vinyl fluoride, and chlorostyrene.

Examples of the crosslinkable monomer include polyfunctional (meth)acrylate compounds such as tetramethylolmethane tetra(meth)acrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, (poly)ethylene glycol di(meth)acrylate, (poly)propylene glycol di(meth)acrylate, (poly)tetramethylene glycol di(meth)acrylate, and 1,4-butanediol di(meth)acrylate; and silane-containing monomers such as triallyl (iso)cyanurate, triallyl trimellitate, divinylbenzene, diallyl phthalate, diallyl acrylamide, diallyl ether, $\gamma$-(meth)

acryloxypropyltrimethoxysilane, trimethoxysilylstyrene, and vinyltrimethoxysilane.

The resin particles can be obtained by polymerizing a polymerizable monomer having an ethylenically unsaturated group by a known method. Examples of the method include a method of performing suspension polymerization in the presence of a radical polymerization initiator, and a method of swelling a monomer together with a radical polymerization initiator using non-crosslinked seed particles to perform polymerization.

When the base particle is an inorganic particle or an organic-inorganic hybrid particle excluding a metal particle, examples of the inorganic substance as a material of the base particle include silica, alumina, barium titanate, zirconia, and carbon black. The inorganic substance is preferably not a metal. The particles formed of silica are not particularly limited, and examples thereof include particles obtained by hydrolyzing a silicon compound having two or more hydrolyzable alkoxysilyl groups to form crosslinked polymer particles, and then performing firing as necessary. Examples of the organic-inorganic hybrid particles include organic-inorganic hybrid particles formed of a crosslinked alkoxysilyl polymer and an acrylic resin.

The organic-inorganic hybrid particle is preferably a core-shell type organic-inorganic hybrid particle having a core and a shell disposed on a surface of the core. The core is preferably an organic core. The shell is preferably an inorganic shell. From the viewpoint of more effectively lowering the connection resistance between the electrodes, the base particle is preferably an organic-inorganic hybrid particle having an organic core and an inorganic shell disposed on a surface of the organic core.

Examples of the material of the organic core include the material of the resin particles described above.

Examples of the material of the inorganic shell include the inorganic substances exemplified as the material of the base particle described above. The material of the inorganic shell is preferably silica. The inorganic shell is preferably formed on the surface of the core by forming a metal alkoxide into a shell-like material by a sol-gel method and then firing the shell-like material. The metal alkoxide is preferably a silane alkoxide. The inorganic shell is preferably formed of silane alkoxide.

When the base particles are metal particles, examples of the metal as a material of the metal particles include silver, copper, nickel, silicon, gold, titanium, and alloys such as solder.

The melting point of the metal particles is preferably higher than 450°C, more preferably 500°C or higher, still more preferably 600°C or higher, further preferably 700°C or higher, even further preferably 800°C or higher, and particularly preferably 900°C or higher. When the melting point of the metal particles is the above lower limit or more, the discharge stability of the conductive paste can be further enhanced. The melting point of the metal particles may be 3000°C or lower, or may be 2500°C or lower. The range of the melting point of the metal particles can be set by appropriately selecting the above lower limit value and the above upper limit value.

The particle size of the base particles is preferably 0.01 $\mu$m or more, more preferably 0.05 $\mu$m or more, still more preferably 0.5 $\mu$m or more, further preferably 1 $\mu$m or more, and particularly preferably 3 $\mu$m or more, and is preferably 50 $\mu$m or less, more preferably 30 $\mu$m or less, further preferably 20 $\mu$m or less, and particularly preferably 10 $\mu$m or less. When the particle size of the base particles is the above lower limit or more, the conduction reliability is further enhanced. When the conductive portion is formed on the surface of the base particle, the conductive portion is hardly aggregated, and aggregated conductive particles are hardly formed. When the particle size of the base particles is the above upper limit or less, the conductive particles are easily sufficiently compressed, and the connection resistance between the electrodes connected via the conductive particles can be further effectively reduced.

The particle size of the base particles is preferably an average particle size, and more preferably a number average particle size. The number average particle size of the base particles can be measured, for example, as follows. An embedded resin body for inspection of base particles is prepared by adding and dispersing the conductive particles in "Technovit 4000" manufactured by Kulzer GmbH so that the content of the conductive particles is 30 wt%. Using an ion milling apparatus ("IM4000" manufactured by Hitachi High-Technologies Corporation), a cross section of the conductive particles is cut out so as to pass near the center of the base particles in the conductive particles dispersed in the embedded resin body for inspection of base particles. Then, using a field emission scanning electron microscope (FE-SEM), the image magnification is set to 25000 times, 50 conductive particles are randomly selected, and the base particle of each conductive particle is observed. The particle size of the base particle in each conductive particle is measured, and the arithmetic average thereof is taken as the average particle size of the base particles.

(Conductive portion)

The conductive portion preferably contains a metal. The metal constituting the conductive portion is not particularly limited. Examples of the metal include gold, silver, copper, platinum, palladium, zinc, lead, aluminum, cobalt, indium, ruthenium, nickel, chromium, titanium, antimony, bismuth, germanium, cadmium, and alloys thereof. Tin-doped indium oxide (ITO) may be used as the metal. Only one kind of the metal may be used, or two or more kinds thereof may be used in combination. From the viewpoint of further lowering the connection resistance between the electrodes, an alloy containing tin, nickel, palladium, ruthenium, silver, copper, or gold is preferable, and nickel or palladium is more preferable.

From the viewpoint of more effectively enhancing the conduction reliability, it is preferable that the conductive portion contains nickel, and it is more preferable that the outer surface portion of the conductive portion contains nickel.

The content of nickel in 100 wt% of the conductive portion containing nickel is preferably 10 wt% or more, more preferably 50 wt% or more, still more preferably 60 wt% or more, further preferably 70 wt% or more, and particularly preferably 90 wt% or more. The content of nickel in 100 wt% of the conductive portion containing nickel may be 100 wt% or less, 99 wt% or less, 90 wt% or less, or 70 wt% or less. The range of the content of nickel in 100 wt% of the conductive portion containing nickel can be set by appropriately selecting the above lower limit value and the above upper limit value.

The conductive portion may be formed of one layer. The conductive portion may be formed of a plurality of layers. That is, the conductive portion may have a laminated structure of two or more layers. When the conductive portion is formed of a plurality of layers, the metal constituting the outermost layer is preferably gold, silver, nickel, palladium, ruthenium, copper, or an alloy containing tin, and more preferably nickel. When the metal constituting the outermost layer is one of these preferable metals, the connection resistance between the electrodes is further lowered.

The method for forming the conductive portion on the surface of the base particle is not particularly limited. Examples of the method for forming the conductive portion include a method by electroless plating, a method by electroplating, a method by physical collision, a method by mechanochemical reaction, a method by physical vapor deposition or physical adsorption, and a method of coating a metal powder or a paste containing a metal powder and a binder on the surface of a base particle. The method for forming the conductive portion is preferably electroless plating, electroplating, or a method by physical collision. Examples of the method by physical vapor deposition include methods such as vacuum vapor deposition, ion plating, and ion sputtering. In the method by physical collision, for example, Theta Composer (manufactured by TOKUJU CORPORATION) or the like is used.

The thickness of the conductive portion is preferably 0.005 $\mu$m or more and more preferably 0.01 $\mu$m or more, and is preferably 10 $\mu$m or less, more preferably 1 $\mu$m or less, and further preferably 0.3 $\mu$m or less. When the thickness of the conductive portion is the above lower limit or more and the above upper limit or less, sufficient conductivity is obtained, and the conductive particles are not excessively hard, and the conductive particles can be sufficiently deformed at the time of connection.

When the conductive portion is formed of a plurality of layers, the thickness of the conductive portion of the outermost layer is preferably 0.001 $\mu$m or more and more preferably 0.01 $\mu$m or more, and is preferably 0.5 $\mu$m or less and more preferably 0.1 $\mu$m or less. When the thickness of the conductive portion of the outermost layer is the above lower limit or more and the above upper limit or less, the conductive portion of the outermost layer becomes uniform, corrosion resistance becomes sufficiently high, and connection resistance between the electrodes can be sufficiently lowered.

The thickness of the conductive portion can be measured, for example, by observing a cross section of the conductive particles using a transmission electron microscope (TEM).

Core substance:

The conductive particle preferably has a plurality of protrusions on the outer surface of the conductive portion. Oxide films are often formed on the surfaces of electrodes connected by the conductive particles. When conductive particles having protrusions on the outer surface of the conductive portion are used, the oxide film can be effectively removed by the protrusions by disposing the conductive particles between the electrodes and pressure-bonding the conductive particles. Therefore, the electrode and the conductive portion are more reliably brought into contact with each other, and the connection resistance between the electrodes is further lowered. At the time of connection between the electrodes, the filler between the conductive particles and the electrodes can be effectively eliminated by the protrusions of the conductive particles. Therefore, the conduction reliability between the electrodes is further enhanced.

Examples of the method for forming the protrusions include a method in which a core substance is attached to the surface of the base particle and then a conductive portion is formed by electroless plating, and a method in which a conductive portion is formed on the surface of the base particle by electroless plating, then a core substance is attached, and then a conductive portion is further formed by electroless plating. In order to form the protrusions, a method for forming the conductive portion on the base particle by electroless plating without using the core substance, then depositing plating in a protrusion shape on the surface of the conductive portion, and further forming the conductive portion by electroless plating, and the like may be used.

Examples of the method for attaching the core substance to the surface of the base particle include a method in which a core substance is added to a dispersion of the base particle, the core substance is accumulated on the surface of the base particle by van der Waals force, and the core substance is attached, and a method in which a core substance is added to a container containing the base particle, and the core substance is attached to the surface of the base particle by a mechanical action such as rotation of the container. From the viewpoint of controlling the amount of the core substance to be attached, the method for attaching the core substance to the surface of the base particle is preferably a method for accumulating and attaching the core substance to the surface of the base particle in the dispersion.

Examples of the substance constituting the core substance include a conductive substance and a non-conductive substance. Examples of the conductive substance include a metal, a metal oxide, a conductive non-metal such as graphite, and a conductive polymer. Examples of the conductive polymer include polyacetylene. Examples of the non-conductive substance include silica, alumina, titanium oxide, tungsten carbide, and zirconia. From the viewpoint of further enhancing the conduction reliability between the electrodes, the core substance is preferably a metal.

The metal is not particularly limited. Examples of the metal include metals such as gold, silver, copper, platinum, zinc, iron, lead, tin, aluminum, cobalt, indium, nickel, chromium, titanium, antimony, bismuth, germanium, and cadmium, and alloys composed of two or more kinds of metals such as a tin-lead alloy, a tin-copper alloy, a tin-silver alloy, a tin-lead-silver alloy, and tungsten carbide. From the viewpoint of further enhancing the conduction reliability between the electrodes, the metal is preferably nickel, copper, silver, or gold. The metal may be the same as or different from the metal constituting the conductive portion.

The shape of the core substance is not particularly limited. The shape of the core substance is preferably massive. Examples of the core substance include particulate agglomerates, agglomerates in which a plurality of microparticles are agglomerated, and amorphous agglomerates.

The particle size of the core substance is preferably 0.001 $\mu$m or more and more preferably 0.05 $\mu$m or more, and is preferably 0.9 $\mu$m or less and more preferably 0.2 $\mu$m or less. When the particle size of the core substance is the above lower limit or more and the above upper limit or less, the connection resistance between the electrodes can be effectively reduced.

The particle size of the core substance is preferably an average particle size, and more preferably a number average particle size. The particle size of the core substance can be determined, for example, by observing 50 arbitrary core substances with an electron microscope or an optical microscope, calculating the average value of the particle sizes of the respective core substances, or performing laser diffraction type particle size distribution measurement.

<Thixotropic agent>

Examples of the thixotropic agent include silica, titania, alumina, sorbitol, and zinc oxide. Only one kind of the thixotropic agent may be used, or two or more kinds thereof may be used in combination.

From the viewpoint of further enhancing the storage stability, the thixotropic agent preferably contains silica, sorbitol, titania, or alumina, and more preferably contains sorbitol.

The thixotropic agent is preferably a solid at 25°C. From the viewpoint of further enhancing the storage stability, the thixotropic agent is preferably present to be dispersed in the conductive paste.

When the thixotropic agent is a solid at 25°C, the particle size of the thixotropic agent is preferably 0.001 $\mu$m or more, more preferably 0.01 $\mu$m or more, and further preferably 0.1 $\mu$m or more, and is preferably 10 $\mu$m or less, more preferably 5 $\mu$m or less, and further preferably 1 $\mu$m or less. When the particle size of the thixotropic agent is the above lower limit or more and the above upper limit or less, the storage stability can be further enhanced, and the conduction reliability can be further enhanced even when mounting is performed in a relatively short time.

The particle size of the thixotropic agent is preferably an average particle size, and more preferably a number average particle size. The average particle size of the thixotropic agent is determined, for example, by observing 50 arbitrary thixotropic agents with an electron microscope or an optical microscope, and calculating the average value of the particle sizes of the respective thixotropic agents or performing laser diffraction type particle size distribution measurement.

The ratio of the particle size of the thixotropic agent to the particle size of the conductive filler (the particle size of the thixotropic agent/the particle size of the conductive filler) is preferably 0.0002 or more, more preferably 0.002 or more, and further preferably 0.02 or more, and is preferably 1.0 or less, more preferably 0.8 or less, further preferably 0.5 or less, particularly preferably 0.1 or less, and most preferably 0.05 or less. When the ratio (the particle size of the thixotropic agent/the particle size of the conductive filler) is the above lower limit or more and the above upper limit or less, the storage stability can be further enhanced, and the conduction reliability can be further enhanced even when mounting is performed in a relatively short time.

The coefficient of variation (CV value) of the particle size of the thixotropic agent is preferably 10% or less, and more preferably 5% or less. When the coefficient of variation of the particle size of the thixotropic agent is the above upper limit or less, the storage stability can be further enhanced, and the conduction reliability can be further enhanced even when mounting is performed in a relatively short time. The lower limit of the coefficient of variation (CV value) of the particle size of the thixotropic agent is not particularly limited. The coefficient of variation (CV value) of the particle size of the thixotropic agent may be 0% or more or 1% or more.

The coefficient of variation (CV value) can be measured as follows.

$$\text{CV value (\%)} = (\rho/D_n) \times 100$$

ρ: standard deviation of particle size of thixotropic agent
Dn: average value of particle sizes of thixotropic agents

The content of the thixotropic agent in 100 wt% of the conductive paste is preferably 0.1 wt% or more, more preferably 0.5 wt% or more, and further preferably 1 wt% or more, and is preferably 20 wt% or less, more preferably 10 wt% or less, and further preferably 7 wt% or less. When the content of the thixotropic agent is the above lower limit or more and the above upper limit or less, the storage stability can be further enhanced, and the conduction reliability can be further enhanced even when mounting is performed in a relatively short time.

The content of the thixotropic agent is preferably 0.1 parts by weight or more and more preferably 0.5 parts by weight or more, and is preferably 30 parts by weight or less, more preferably 20 parts by weight or less, and further preferably 10 parts by weight or less with respect to 100 parts by weight of the content of the thermosetting compound. When the content of the thixotropic agent is the above lower limit or more and the above upper limit or less, the storage stability can be further enhanced, and the conduction reliability can be further enhanced even when mounting is performed in a relatively short time.

<Antioxidant>

Since the conductive paste contains an antioxidant, the conduction reliability can be enhanced even when mounting is performed in a relatively short time.

Examples of the antioxidant include a hindered phenol-based antioxidant and a thioether-based antioxidant. Only one kind of the antioxidant may be used, or two or more kinds thereof may be used in combination.

From the viewpoint of further enhancing the conduction reliability even when mounting is performed in a relatively short time, the antioxidant preferably contains a hindered phenol-based antioxidant.

The antioxidant may be a solid at 25°C or a liquid at 25°C. From the viewpoint of improving the storage stability, the antioxidant is preferably a solid at 25°C.

When the antioxidant is a solid at 25°C, the particle size of the antioxidant is preferably 0.01 μm or more, more preferably 0.05 μm or more, and further preferably 0.1 μm or more, and is preferably 10 μm or less, more preferably 5 μm or less, and further preferably 1 μm or less. When the particle size of the antioxidant is the above lower limit or more and the above upper limit or less, the storage stability can be further enhanced, and the conduction reliability can be further enhanced even when mounting is performed in a relatively short time.

The content of the antioxidant in 100 wt% of the conductive paste is preferably 0.1 wt% or more and more preferably 0.5 wt% or more, and is preferably 10 wt% or less, more preferably 7 wt% or less, and further preferably 5 wt% or less. When the content of the antioxidant is the above lower limit or more and the above upper limit or less, the storage stability can be further enhanced, and the conduction reliability can be further enhanced even when mounting is performed in a relatively short time.

The content of the antioxidant is preferably 0.1 parts by weight or more and more preferably 0.5 parts by weight or more, and is preferably 30 parts by weight or less, more preferably 20 parts by weight or less, and further preferably 10 parts by weight or less with respect to 100 parts by weight of the content of the thermosetting compound. When the content of the antioxidant is the above lower limit or more and the above upper limit or less, the storage stability can be further enhanced, and the conduction reliability can be further enhanced even when mounting is performed in a relatively short time.

<Other components>

The conductive paste may contain components other than the thermosetting compound, the thermosetting agent, the conductive filler, the thixotropic agent, and the antioxidant. The conductive paste may contain, as other components, a solvent, an inorganic filler, an organic filler, a colorant, a polymerization inhibitor, a chain transfer agent, an ultraviolet absorber, an antifoaming agent, a leveling agent, a surfactant, a slipping agent, an antiblocking agent, a wax, a masking agent, a deodorant, an aromatic agent, an antiseptic agent, an antibacterial agent, an antistatic agent, an adhesion imparting agent, and the like.

(RFID inlay and method for producing RFID inlay)

An RFID inlay according to the present invention includes a substrate having a wiring on a surface, a chip having an electrode on a surface, and an adhesive portion bonding the substrate and the chip. In the RFID inlay according to the present invention, the material of the adhesive portion is the above-described conductive paste. In the RFID inlay according to the present invention, the wiring and the electrode are electrically connected by the conductive filler in the adhesive portion.

Fig. 1 is a cross-sectional view schematically illustrating an RFID inlay using a conductive paste according to a first embodiment of the present invention.

An RFID inlay 81 illustrated in Fig. 1 includes a substrate 82 having a wiring on a surface, a chip 83 having an electrode on a surface, and an adhesive portion 84 bonding the substrate 82 and the chip 83. The material of the adhesive portion 84 is a conductive paste containing a conductive filler 1. The adhesive portion 84 is formed of a conductive paste containing the conductive filler 1. The adhesive portion 84 is preferably formed by curing a conductive paste containing the conductive filler 1.

The substrate 82 has a wiring 82a on the surface (upper surface). The chip 83 has an electrode 83a on the surface (lower surface). The wiring 82a and the electrode 83a are electrically connected by the conductive filler 1 in the adhesive portion 84.

A method for producing an RFID inlay according to the present invention includes the following steps (1) to (3): (1) a first disposing step of disposing the above-described conductive paste on a surface of a substrate having a wiring on a surface; (2) a second disposing step of disposing a chip having an electrode on a surface on a surface of the conductive paste opposite to the substrate side; and (3) a bonding step of heating and pressurizing the conductive paste to form an adhesive portion bonding the substrate and the chip with the conductive paste, and electrically connecting the wiring and the electrode by the conductive filler in the adhesive portion.

In the RFID inlay and the method for producing an RFID inlay according to the present invention, since a specific conductive paste is used, adhesiveness between the substrate and the chip can be enhanced, and the conduction reliability can be enhanced.

In the method for producing an RFID inlay, it is preferable that the substrate has an elongated shape, and in the first disposing step, the second disposing step, and the bonding step, the substrate having an elongated shape is conveyed by a roll-to-roll method to produce an RFID inlay. In this case, a plurality of RFID inlays can be continuously produced, and the production efficiency of the RFID inlay can be further enhanced.

When the roll-to-roll method is used, the transport speed of the substrate is not particularly limited.

Examples of the method for disposing the conductive paste include application by a dispenser, screen printing, and ejection by an inkjet device.

The heating temperature in the bonding step is preferably 100°C or higher and more preferably 150°C or higher, and is preferably 400°C or lower, more preferably 300°C or lower, and further preferably 250°C or lower. When the heating temperature in the bonding step is the above lower limit or more and the above upper limit or less, the electrical connection between the chip and the substrate can be improved.

The pressurizing pressure in the bonding step is preferably 0.5 N or more and more preferably 1 N or more, and is preferably 3.5 N or less, more preferably 3 N or less, and further preferably 2.5 N or less. When the pressurizing pressure in the bonding step is the above lower limit or more and the above upper limit or less, the adhesiveness between the substrate and the chip can be enhanced, and the conduction reliability can be enhanced.

The heating and pressurizing time in the bonding step is not particularly limited. The heating and pressurizing time in the bonding step may be 2 seconds or more, 15 seconds or less, 10 seconds or less, 9 seconds or less, or 7 seconds or less.

The RFID inlay may be cut into a predetermined size as necessary, or may be cut and used. It is preferable that a plurality of the chips are bonded onto the substrate having an elongated shape by a plurality of the adhesive portions. A plurality of laminates of the chip and the adhesive portion may be disposed on the substrate having an elongated shape. In the first disposing step, the conductive paste is preferably disposed at a plurality of positions on the surface of the substrate having an elongated shape. In the second disposing step, it is preferable to dispose the chips on the surface of each of the conductive pastes disposed at the plurality of positions opposite to the substrate side using the plurality of chips. After the chip is bonded onto the substrate having an elongated shape by the adhesive portion, the substrate having an elongated shape may be cut.

The substrate is not particularly limited. The substrate is preferably a circuit board. Examples of the circuit board include a resin film, a flexible printed board, a rigid flexible board, a glass substrate, and a paper substrate. The substrate may be a resin substrate, a glass substrate, or a paper substrate.

The substrate has a wiring (antenna pattern) on a surface. A wiring (antenna pattern) is formed on a surface of a base material. The substrate preferably includes a base material and a wiring (antenna pattern) disposed on a surface of the base material.

Examples of the material of the base material include a resin, glass, and paper. Examples of the resin include polyethylene terephthalate (PET), polypropylene (PP), and polyvinyl chloride (PVC). The paper may be impregnated with an epoxy resin or a phenol resin. From the viewpoint of further enhancing the adhesiveness and producing the RFID inlay by a roll-to-roll method, the material of the base material is preferably a resin or paper, and more preferably polyethylene terephthalate (PET) or paper. The base material may be a resin, glass, or paper.

Examples of the wiring (antenna pattern) include a gold wiring, a nickel wiring, a tin wiring, an aluminum wiring, a silver wiring, an SUS wiring, a copper wiring, a molybdenum wiring, and a tungsten wiring. From the viewpoint of improving the operation sensitivity in the UHF band (860 MHz to 960 MHz), the wiring is preferably an aluminum wiring.

From the viewpoint of suppressing deformation of the substrate due to heat at the time of mounting a chip (for example, an IC chip) and enhancing flexibility, the thickness of the substrate is preferably 20 μm or more and more preferably 30 μm or more, and is preferably 200 μm or less and more preferably 100 μm or less.

The shapes of the substrate and the base material are not particularly limited. From the viewpoint of producing the RFID inlay by a roll-to-roll method, the substrate and the base material are preferably elongated. The lengths of the substrate and the base material are not particularly limited. The lengths of the substrate and the base material may be 1 m or more, 10 m or more, 5000 m or less, or 1000 m or less.

Examples of the chip include a semiconductor chip (IC chip).

The chip has an electrode on a surface. Examples of the electrode include metal electrodes such as a gold electrode, a nickel electrode, a tin electrode, an aluminum electrode, a silver electrode, an SUS electrode, a copper electrode, a molybdenum electrode, and a tungsten electrode. From the viewpoint of further enhancing the conduction reliability, the electrode is preferably a copper electrode or a gold electrode, and more preferably a copper electrode.

The number of electrodes per chip is not particularly limited. The number of electrodes per chip may be 1 or more, 4 or more, 20 or less, or 10 or less.

The shape of the chip is not particularly limited. The shape of the chip may be a rectangular shape, a triangular shape, or a circular shape.

The plane area of the chip is preferably 0.04 mm$^2$ or more, more preferably 0.09 mm$^2$ or more, and further preferably 0.16 mm$^2$ or more, and is preferably 0.50 mm$^2$ or less, more preferably 0.40 mm$^2$ or less, and further preferably 0.30 mm$^2$ or less. When the plane area of the chip is the above lower limit or more, the conductive paste can be disposed on a fine wiring with high accuracy. When the plane area of the chip is the above upper limit or less, the conduction reliability can be maintained even when the RFID inlay is left to stand for a long time in a high temperature and high humidity environment. The conductive paste according to the present invention can be suitably used for bonding relatively small chips.

Hereinafter, the present invention will be specifically described with reference to Examples and Comparative Examples. The present invention is not limited only to the following Examples.

The following materials were prepared.

Thermosetting compound:

"EXA830CRP" (bisphenol F type epoxy compound) manufactured by DIC Corporation
"EXA850CRP" (bisphenol A type epoxy compound) manufactured by DIC Corporation

Thermosetting agent:

"AMICURE PN23" (amine curing agent, solid at 25°C) manufactured by Ajinomoto Fine-Techno Co., Inc.
"NOVACURE HX3932HP" (amine curing agent, microcapsule-type thermosetting agent) manufactured by Asahi Kasei Corporation
"TD-984" (polyamidoamine curing agent, liquid at 25°C) manufactured by DIC Corporation
"Diethylenetriamine" (amine curing agent, liquid at 25°C) manufactured by TCI

Conductive filler:
"CN050" (nickel particles, average particle size: 5 μm) manufactured by NIKKO RICA CORPORATION
Thixotropic agent:

"PM-20L" (silica, solid at 25°C, average particle size: 0.012 μm) manufactured by Tokuyama Corporation
"GEL ALL D" (sorbitol, solid at 25°C, average particle size: 0.10 μm) manufactured by New Japan Chemical Co., Ltd.
"43-00-502" (silica, solid at 25°C, average particle size: 0.5 μm) manufactured by micromod
"43-00-303" (silica, solid at 25°C, average particle size: 3 μm) manufactured by micromod
"43-00-503" (silica, solid at 25°C, average particle size: 5 μm) manufactured by micromod

Antioxidant:
"Irganox 1010" (hindered phenol-based antioxidant, solid at 25°C, average particle size: 0.1 μm) manufactured by BASF Japan Ltd.
Chip:
IC chip (copper electrode, "UCODE 9" manufactured by NXP Semiconductors, plane area: 0.22 mm$^2$)
Substrate:
PET film (elongated shape, resin film having aluminum wiring in UHF band (860 MHz to 960 MHz) operating frequency)

(Example 1)

(1) Preparation of conductive paste

The materials shown in Table 1 below were blended in the blending amounts (parts by weight) shown in Table 1 below, and stirred using a planetary stirrer ("Awatori Rentaro" manufactured by THINKY CORPORATION) to obtain a conductive paste (anisotropic conductive paste).

(2) Preparation of RFID inlay

The obtained conductive paste was applied onto a PET film by a jet dispensing method to form a conductive paste layer (adhesive portion layer) (first disposing step). Next, an IC chip was laminated on the surface of the conductive paste layer (adhesive portion layer) opposite to the substrate side such that the wiring on the PET film surface and the electrode on the chip surface faced each other (second disposing step). Thereafter, thermocompression bonding was performed under the conditions of an upper heat tool of 180°C, a lower heat tool of 180°C, a pressure of 2 N, and a compression bonding time of 3 seconds to cure the conductive paste layer (adhesive portion layer), thereby forming an adhesive portion. The wiring on the surface of the PET film and the electrode on the surface of the chip were electrically connected by the conductive filler (conductive particles) in the adhesive portion to obtain a connection structure (bonding step). Note that the first disposing step, the second disposing step, and the bonding step were performed using "DDA 40000" (roll-to-roll method) manufactured by Muhlbauer. The obtained connection structure was cut into a size of 5 cm × 1.5 cm using "DCL 30000" manufactured by Muhlbauer to obtain 50 RFID inlays.

(Examples 2 to 7 and Comparative Examples 1 to 4)

A conductive paste and an RFID inlay were obtained in the same manner as in Example 1 except that the blending components and the blending amounts of the conductive paste were changed as shown in Tables 1 to 3.

(Evaluation)

(1) Differential scanning calorimetry

A differential scanning calorimeter ("TA7000" manufactured by Hitachi High-Tech Science Corporation) was prepared, 5 mg of the obtained conductive paste was taken in a dedicated aluminum pan, and the aluminum pan was covered with a dedicated jig. This dedicated aluminum pan and an empty aluminum pan (reference) were placed in a heating unit, and heated from 30°C to 200°C at a temperature increasing rate of 10°C/min in the air atmosphere to observe the reverse heat flow and the non-reverse heat flow. Using the exothermic peak observed in the non-reverse heat flow as the exothermic peak of the conductive paste, the exothermic onset temperature, the exothermic peak top temperature, and the exothermic end temperature were determined.

(2) Storage stability (pot life)

The viscosity ($\eta25$) at 25°C of the conductive paste immediately after preparation was measured by the method described above. The viscosity ($\eta\alpha$) at 25°C after storing the conductive paste at 25°C and 50% RH for 24 hours was measured by the method described above. The ratio of the viscosity ($\eta\alpha$) after storage to the viscosity ($\eta25$) immediately after preparation (viscosity ($\eta\alpha$) after storage/viscosity ($\eta25$) immediately after preparation) was determined, and the storage stability (pot life) was determined according to the following criteria.

[Determination criteria for storage stability (pot life)]

⊙: The ratio of the viscosity after storage to the viscosity immediately after preparation is less than 1.1
○: The ratio of the viscosity after storage to the viscosity immediately after preparation is 1.1 or more and less than 1.25.
×: The ratio of the viscosity after storage to the viscosity immediately after preparation is 1.25 or more.

(3) Curability (gel time) of conductive paste

A conductive paste was applied onto a glass plate to have a thickness of 30 $\mu$m. The glass plate was placed on the surface of a hot plate (set temperature: 180°C) from the surface opposite to a side to which the paste was applied, and the elapsed time until the paste gelated was measured. The curability (gel time) of the conductive paste was determined according to the following criteria. The yarn pulling was checked using a needle with a handle every 5 seconds, and when the yarn was not broken, it was determined that the conductive paste gelated.

[Determination criteria for curability (gel time) of conductive paste]

∞: The elapsed time until the paste gelates is less than 15 seconds.
○: The elapsed time until the paste gelates is 15 seconds or more and less than 30 seconds.
×: The elapsed time until the paste gelates is 30 seconds or more.

(4) Adhesiveness (die shear strength)

For the obtained RFID inlay, the chip was peeled off from the base material under the conditions of a tool height of 30 μm and a speed of 100 μm/sec using a die shear tester ("DAGE4000PLUS" manufactured by Nordson Corporation), and the die shear strength at 25°C was evaluated. The adhesiveness (die shear strength) was determined according to the following criteria.

[Determination criteria for adhesiveness (die shear strength)]

∞: The die shear strength is 7.0 N or more.
○: The die shear strength is 4.0 N or more and less than 7.0 N.
×: The die shear strength is less than 4.0 N.

(5) Tackiness of cured product

A PTFE mold filled with the prepared conductive paste was prepared, and heated in an oven at 180°C for 300 seconds to obtain a strip-shaped cured product of 5 mm × 40 mm × 2 mm. The obtained cured product was left to stand at room temperature for 12 hours or more, and the cured product was cooled. At 25°C, it was observed whether or not the cured product was lifted up when one end of the cured product was touched with the tip of the needle with a handle. The tackiness of the cured product was determined according to the following criteria.

[Determination criteria for tackiness of cured product]

∞: The cured product is not lifted up.
○: One end side of the cured product is lifted up while the other end not touched by the needle with a handle is grounded.
×: The whole cured product is lifted up.

(6) Conduction reliability

The obtained 50 RFID inlays were left to stand at 85°C and 85% RH (in a high temperature and high humidity environment) for 168 hours, and then placed in a dark box shielding external radio waves, and the peak sensitivity at 25°C in the UHF band (860 MHz to 960 MHz) was measured using a frequency reader ("Tagformance Pro" manufactured by VOYANTIC). The conduction reliability was determined according to the following criteria.

[Determination criteria for conduction reliability]

∞: The peak sensitivity of all RFID inlays is less than -18 dBm.
○: Not applicable to ○ and ×.
×: The peak sensitivity of at least one RFID inlay is -16.4 dBm or more.

The composition and results of the conductive paste are shown in Tables 1 to 3 below.

[Table 1]

| | | | | Example 1 | Example 2 | Example 3 | Example 4 |
|---|---|---|---|---|---|---|---|
| Conductive paste | Thermosetting compound | EXA830CRP | Parts by weight | 31.0 | 31.0 | 31.0 | 31.0 |
| | | EXA850CRP | Parts by weight | 31.0 | 31.0 | 31.0 | 31.0 |
| | Thermosetting agent | AMICURE PN23 | Parts by weight | 10.0 | 10.0 | | |
| | | NOVACURE HX3932HP | Parts by weight | | | 10.0 | 10.0 |
| | | TD-984 | Parts by weight | | | | |
| | | Diethylenetriamine | Parts by weight | | | | |
| | Conductive filler | CN050 | Parts by weight | 25.0 | 25.0 | 25.0 | 25.0 |
| | Thixotropic agent | PM-20L | Parts by weight | 2.0 | | 2.0 | |
| | | GEL ALL D | Parts by weight | | 2.0 | | 2.0 |
| | | 43-00-502(0.5 μm) | Parts by weight | | | | |
| | | 43-00-303(3 μm) | Parts by weight | | | | |
| | | 43-00-503(5 μm) | Parts by weight | | | | |
| | Antioxidant | Irganox1010 | Parts by weight | 1.0 | 1.0 | 1.0 | 1.0 |
| | Ratio (particle size of thixotropic agent/particle size of conductive filler) | | – | 0.002 | 0.020 | 0.002 | 0.020 |
| Evaluation | Exothermic onset temperature | | °C | 80.0 | 80.0 | 70.0 | 70.0 |
| | Exothermic peak top temperature | | °C | 120.0 | 120.0 | 110.0 | 110.0 |
| | Exothermic end temperature | | °C | 160.0 | 160.0 | 150.0 | 150.0 |
| | Storage stability | | – | ○ | ○○ | ○ | ○○ |
| | Curability of conductive paste | | – | ○○ | ○○ | ○○ | ○○ |
| | Adhesiveness | | – | ○ | ○ | ○○ | ○○ |
| | Tackiness of cured product | | – | ○○ | ○○ | ○○ | ○○ |
| | Conduction reliability | | – | ○ | ○ | ○○ | ○○ |

[Table 2]

| | | | | Example 5 | Example 6 | Example 7 |
|---|---|---|---|---|---|---|
| Conductive paste | Thermosetting compound | EXA830CRP | Parts by weight | 31.0 | 31.0 | 31.0 |
| | | EXA850CRP | Parts by weight | 31.0 | 31.0 | 31.0 |
| | Thermosetting agent | AMICURE PN23 | Parts by weight | | | |
| | | NOVACURE HX3932HP | Parts by weight | 10.0 | 10.0 | 10.0 |
| | | TD-984 | Parts by weight | | | |
| | | Diethylenetriamine | Parts by weight | | | |
| | Conductive filler | CN050 | Parts by weight | 25.0 | 25.0 | 25.0 |
| | Thixotropic agent | PM-20L | Parts by weight | | | |
| | | GEL ALL D | Parts by weight | | | |
| | | 43-00-502(0.5 μm) | Parts by weight | | 2.0 | |
| | | 43-00-303(3 μm) | Parts by weight | | | 2.0 |
| | | 43-00-503(5 μm) | Parts by weight | 2.0 | | |
| | Antioxidant | Irganox1010 | Parts by weight | 1.0 | 1.0 | 1.0 |
| | Ratio (particle size of thixotropic agent/particle size of conductive filler) | | − | 1.0 | 0.1 | 0.6 |
| Evaluation | Exothermic onset temperature | | °C | 70.0 | 70.0 | 70.0 |
| | Exothermic peak top temperature | | °C | 110.0 | 110.0 | 110.0 |
| | Exothermic end temperature | | °C | 150.0 | 150.0 | 150.0 |
| | Storage stability | | − | ○ | ○○ | ○ |
| | Curability of conductive paste | | − | ○○ | ○○ | ○○ |
| | Adhesiveness | | − | ○○ | ○○ | ○○ |
| | Tackiness of cured product | | − | ○○ | ○○ | ○○ |
| | Conduction reliability | | − | ○ | ○○ | ○ |

[Table 3]

| | | | | Comparative Example 1 | Comparative Example 2 | Comparative Example 3 | Comparative Example 4 |
|---|---|---|---|---|---|---|---|
| Conductive paste | Thermosetting compound | EXA830CRP | Parts by weight | 31.0 | 31.0 | 31.5 | 32.0 |
| | | EXA850CRP | Parts by weight | 31.0 | 31.0 | 31.5 | 32.0 |
| | Thermosetting agent | AMICURE PN23 | Parts by weight | | | | 10.0 |
| | | NOVACURE HX3932HP | Parts by weight | | | 10.0 | |
| | | TD-984 | Parts by weight | 10.0 | | | |
| | | Diethylenetriamine | Parts by weight | | 10.0 | | |
| | Conductive filler | CN050 | Parts by weight | 25.0 | 25.0 | 25.0 | 25.0 |
| | Thixotropic agent | PM-20L | Parts by weight | 2.0 | 2.0 | 2.0 | |
| | | GEL ALL D | Parts by weight | | | | |
| | | 43-00-502(0.5 μm) | Parts by weight | | | | |
| | | 43-00-303(3 μm) | Parts by weight | | | | |
| | | 43-00-503(5 μm) | Parts by weight | | | | |
| | Antioxidant | Irganox1010 | Parts by weight | 1.0 | 1.0 | | 1.0 |
| | Ratio (particle size of thixotropic agent/particle size of conductive filler) | | – | 0.002 | 0.002 | 0.002 | 0.002 |
| Evaluation | Exothermic onset temperature | | °C | 120.0 | 40.0 | 80.0 | 80.0 |
| | Exothermic peak top temperature | | °C | 150.0 | 70.0 | 120.0 | 120.0 |
| | Exothermic end temperature | | °C | 210.0 | 120.0 | 160.0 | 160.0 |
| | Storage stability | | – | ○○ | × | ○○ | × |
| | Curability of conductive paste | | – | × | ○○ | ○○ | ○○ |
| | Adhesiveness | | – | × | ○○ | ○○ | ○ |
| | Tackiness of cured product | | – | × | ○○ | ○○ | ○○ |
| | Conduction reliability | | – | × | ○○ | × | × |

Note that, in Example 5 and Example 7, the determination results of the storage stability were all "○". However, the value of "ratio of the viscosity after storage to the viscosity immediately after preparation", which is a criterion for storage stability, was smaller in Example 7 than in Example 5, and the storage stability of Example 7 was superior to that of Example 5.

**EXPLANATION OF SYMBOLS**

1: Conductive filler
81: RFID inlay
82: Substrate having wiring on surface
82a: Wiring
83: Chip having electrode on surface
83a: Electrode
84: Adhesive portion

**Claims**

1. A conductive paste comprising:

   a thermosetting compound; a thermosetting agent; a conductive filler; a thixotropic agent; and an antioxidant, the thermosetting agent containing a microcapsule-type thermosetting agent or a thermosetting agent that is a solid at 25°C.

2. The conductive paste according to claim 1, wherein

   the thixotropic agent is a solid at 25°C, and
   a ratio of a particle size of the thixotropic agent to a particle size of the conductive filler is 0.5 or less.

3. The conductive paste according to claim 1 or 2, wherein

   the thermosetting compound contains an epoxy compound, and
   the thermosetting agent contains an anionic curing agent.

4. The conductive paste according to any one of claims 1 to 3, wherein

   the conductive filler is conductive particles, and
   a particle size of the conductive particles is 10 $\mu$m or less.

5. The conductive paste according to any one of claims 1 to 4, which is used for obtaining an RFID inlay.

6. An RFID inlay comprising:

   a substrate having a wiring on a surface; a chip having an electrode on a surface; and an adhesive portion bonding the substrate and the chip,
   a material of the adhesive portion being the conductive paste according to any one of claims 1 to 5, and
   the wiring and the electrode being electrically connected by the conductive filler in the adhesive portion.

7. A method for producing an RFID inlay, comprising:

   a first disposing step of disposing the conductive paste according to any one of claims 1 to 5 on a surface of a substrate having a wiring on a surface;
   a second disposing step of disposing a chip having an electrode on a surface on a surface of the conductive paste opposite to the substrate side; and
   a bonding step of heating and pressurizing the conductive paste to form an adhesive portion bonding the substrate and the chip with the conductive paste, and electrically connecting the wiring and the electrode by the conductive filler in the adhesive portion.

8. The method for producing an RFID inlay according to claim 7, wherein

   the substrate has an elongated shape, and

in the first disposing step, the second disposing step, and the bonding step, the substrate having an elongated shape is conveyed by a roll-to-roll method to produce an RFID inlay.

[FIG. 1.]

81

1                              82a

83

84

82

83a

## INTERNATIONAL SEARCH REPORT

| International application No. |
|---|
| **PCT/JP2024/029864** |

**A. CLASSIFICATION OF SUBJECT MATTER**

*H01B 1/22*(2006.01)i; *C09J 9/02*(2006.01)i; *C09J 11/04*(2006.01)i; *C09J 163/00*(2006.01)i; *H01R 11/01*(2006.01)i
FI: H01B1/22 A; C09J163/00; C09J11/04; H01R11/01 501C; H01R11/01 501A; C09J9/02

According to International Patent Classification (IPC) or to both national classification and IPC

**B. FIELDS SEARCHED**

Minimum documentation searched (classification system followed by classification symbols)

H01B1/22; C09J9/02; C09J11/04; C09J163/00; H01R11/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-145418 A (DEXERIALS CORP.) 20 September 2018 (2018-09-20) paragraphs [0051]-[0065], [0116]-[0119] | 1-8 |
| Y | JP 2010-129455 A (SEKISUI CHEMICAL CO., LTD.) 10 June 2010 (2010-06-10) paragraphs [0049]-[0053] | 1-8 |
| Y | JP 2012-156066 A (NIPPON SHOKUBAI CO., LTD.) 16 August 2012 (2012-08-16) paragraph [0055] | 1-8 |
| Y | JP 2012-142255 A (SEKISUI CHEMICAL CO., LTD.) 26 July 2012 (2012-07-26) paragraph [0067] | 1-8 |

☐ Further documents are listed in the continuation of Box C.　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 October 2024** | **05 November 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/029864**

| Patent document cited in search report | | | Publication date (day/month/year) | Patent family member(s) | | | Publication date (day/month/year) |
|---|---|---|---|---|---|---|---|
| JP | 2018-145418 | A | 20 September 2018 | KR 10-2019-0104625 | | A | |
| | | | | CN | 110300780 | A | |
| JP | 2010-129455 | A | 10 June 2010 | (Family: none) | | | |
| JP | 2012-156066 | A | 16 August 2012 | (Family: none) | | | |
| JP | 2012-142255 | A | 26 July 2012 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006144018 A
- JP 2013124330 A